# EUROPEAN PATENT APPLICATION

(11) **EP 3 951 604 A1**
(43) Date of publication of application: **09.02.2022**
(21) Application number: 20785115.5
(22) Date of filing: 30.03.2020
(51) Int. Cl.: G06F 13/00

(54) **COMMUNICATION ASSISTANCE SYSTEM, COMMUNICATION ASSISTANCE METHOD, COMMUNICATION ASSISTANCE PROGRAM, AND IMAGE CONTROL PROGRAM**

(30) Priority: 01.04.2019 JP 2019070095; 14.06.2019 JP 2019110923; 30.09.2019 JP 2019179883
(71) Applicant: SUMITOMO ELECTRIC INDUSTRIES, LTD., Osaka-shi, Osaka 541-0041 (JP)
(72) Inventor: OKINA Yuna, Osaka-shi, Osaka 541-0041 (JP); KAKII Toshiaki, Osaka-shi, Osaka 541-0041 (JP); DAI Guiming, Osaka-shi, Osaka 541-0041 (JP); HOSOYA Toshifumi, Osaka-shi, Osaka 541-0041 (JP); NOMURA Yasushi, Osaka-shi, Osaka 541-0041 (JP)
(74) Representative: Boult Wade Tennant LLP
(86) International application number: PCT/JP2020/014674
(87) International publication number: WO 2020/204000

(57) **Abstract**

A communication assistance system according to one aspect of the present disclosure assists communication between a first user corresponding to a first terminal and a second user corresponding to a second terminal. The communication assistance system includes at least one processor. The at least one processor receives video data representing the first user from the first terminal, analyzes the video data and selects a movement pattern corresponding to a non-verbal behavior of the first user from a movement pattern group of an avatar, and transmits control data indicating the selected movement pattern to the second terminal such that an avatar corresponding to the first user in a virtual space displayed on the second terminal is moved based on the selected movement pattern.

## Description

### Technical Field

One aspect of the present disclosure relates to a communication assistance system, a communication assistance method, a communication assistance program, and an image control program.

This application claims priority based on Japanese Patent Application No. 2019-070095 filed on April 1, 2019, Japanese Patent Application No. 2019-110923 filed on June 14, 2019, and Japanese Patent Application No. 2019-179883 filed on September 30, 2019, and incorporates all the contents described in the Japanese patent applications.

### Background Art

A communication assistance system assisting communication between a first user corresponding to a first terminal and a second user corresponding to a second terminal has been known. For example, in Patent Literature 1, a visual line matching image generating device matching up visual lines of members performing remote interaction is described. In Patent Literature 2, an image processing device for an interaction device that is used in a video phone, a video conference, or the like is described. In Patent Literature 3, a visual line matching face image synthesis method in a video conference system is described.

### Citation List

### Patent Literature

Patent Literature 1: Japanese Unexamined Patent Publication No. 2015-191537
Patent Literature 2: Japanese Unexamined Patent Publication No. 2016-085579
Patent Literature 3: Japanese Unexamined Patent Publication No. 2017-130046

### Summary of Invention

A communication assistance system according to one aspect of the present disclosure assists communication between a first user corresponding to a first terminal and a second user corresponding to a second terminal. The communication assistance system includes at least one processor. The at least one processor receives video data representing the first user from the first terminal, analyzes the video data and selects a movement pattern corresponding to a non-verbal behavior of the first user from a movement pattern group of an avatar, and transmits control data indicating the selected movement pattern to the second terminal such that an avatar corresponding to the first user in a virtual space displayed on the second terminal is moved based on the selected movement pattern.

### Brief Description of Drawings

FIG. 1 is a diagram illustrating an example of an outline of a communication assistance system according to an embodiment.
FIG. 2 is a diagram illustrating an example of a deviation of a visual line.
FIG. 3 is a diagram illustrating an example of a virtual space and an avatar.
FIG. 4 is another diagram illustrating the example of the virtual space and the avatar, and more specifically, is a diagram describing joint attention.
FIG. 5 is still another diagram illustrating the example of the virtual space and the avatar, and more specifically, is a diagram describing several examples of a movement pattern of the avatar.
FIG. 6 is a diagram illustrating an example of a hardware configuration relevant to the communication assistance system according to the embodiment.
FIG. 7 is a diagram illustrating an example of a function configuration of a terminal according to the embodiment.
FIG. 8 is a diagram illustrating an example of a function configuration of a server according to the embodiment.
FIG. 9 is a sequence diagram illustrating an example of an operation of the communication assistance system according to the embodiment as a processing flow S1.
FIG. 10 is another sequence diagram illustrating an example of the operation of the communication assistance system according to the embodiment as a processing flow S2.
FIG. 11 is still another sequence diagram illustrating an example of the operation of the communication assistance system according to the embodiment as a processing flow S3.

### Description of Embodiments

### [Problem to Be Solved by Present Disclosure]

In communication assistance using an image, it is desired to attain natural communication.

### [Effects of Present Disclosure]

According to one aspect of the present disclosure, natural communication using an image can be attained.

### [Description of Embodiments of Present Disclosure]

Embodiments of the present disclosure will be described by being listed. At least a part of the following embodiments may be arbitrarily combined.

A communication assistance system according to one aspect of the present disclosure assists communication between a first user corresponding to a first terminal and a second user corresponding to a second terminal. The communication assistance system includes at least one processor. The at least one processor receives video data representing the first user from the first terminal, analyzes the video data and selects a movement pattern corresponding to a non-verbal behavior of the first user from a movement pattern group of an avatar, and transmits control data indicating the selected movement pattern to the second terminal such that an avatar corresponding to the first user in a virtual space displayed on the second terminal is moved based on the selected movement pattern.

A communication assistance method according to one aspect of the present disclosure is executed by a communication assistance system that assists communication between a first user corresponding to a first terminal and a second user corresponding to a second terminal and includes at least one processor. The communication assistance method includes: a step of receiving video data representing the first user from the first terminal; a step of analyzing the video data and of selecting a movement pattern corresponding to a non-verbal behavior of the first user from a movement pattern group of an avatar; and a step of transmitting control data indicating the selected movement pattern to the second terminal such that an avatar corresponding to the first user in a virtual space displayed on the second terminal is moved based on the selected movement pattern.

A communication assistance program according to one aspect of the present disclosure allows a computer to function as a communication assistance system assisting communication between a first user corresponding to a first terminal and a second user corresponding to a second terminal. The communication assistance program allows the computer to execute: a step of receiving video data representing the first user from the first terminal; a step of analyzing the video data and of selecting a movement pattern corresponding to a non-verbal behavior of the first user from a movement pattern group of an avatar; and a step of transmitting control data indicating the selected movement pattern to the second terminal such that an avatar corresponding to the first user in a virtual space displayed on the second terminal is moved based on the selected movement pattern.

An image control program according to one aspect of the present disclosure allows a computer to function as a second terminal that is capable of being connected to a first terminal through a communication network. The image control program allows the computer to execute: a step of receiving control data indicating a movement pattern corresponding to a non-verbal behavior of a first user corresponding to the first terminal; and a step of moving an avatar corresponding to the first user in a virtual space displayed on the second terminal, based on the movement pattern that is indicated by the received control data. The movement pattern is selected as the movement pattern corresponding to the non-verbal behavior from a movement pattern group of an avatar by analyzing video data of the first user that is captured by the first terminal.

In such an aspect, the non-verbal behavior of the first user is reflected in the movement of the avatar, and thus, the second user is capable of attaining natural communication with the first user through the avatar.

In the communication assistance system according to another aspect, the at least one processor may selects a movement pattern corresponding to the non-verbal behavior of the first user and voice information of the first user by using learning model, and the learning model may be a learned model that is generated by using training data such that information indicating a movement pattern corresponding to a non-verbal behavior of a user and voice information of the user is output when video data of the user or the video data of the user and data based on the video data are input. By using the learning model as described above, not only the non-verbal behavior of the first user but also the voice information of the first user can be reflected in the movement of the avatar.

In the communication assistance system according to another aspect, the voice information of the first user may include a voice and a language of the first user, and the video data of the user or the data based on the video data may include image data and the voice information of the user. Accordingly, the voice and the language of the first user can be reflected in the movement of the avatar.

In the communication assistance system according to another aspect, the at least one processor may select the movement pattern such that a visual line of the avatar is directed toward the second user. Accordingly, the visual line of the avatar and the visual line of the second user can be matched up.

In the communication assistance system according to another aspect, the at least one processor may generate the control data by expressing the selected movement pattern in a text. The movement pattern for moving the avatar is expressed in the text (that is, a character string), and thus, a data size to be transmitted to the second terminal is greatly suppressed. Therefore, a processing load on the communication network and the terminal can be reduced and the avatar can be moved in real time in accordance with the behavior of the first user.

In the communication assistance system according to another aspect, the at least one processor may generate the control data by describing the selected movement pattern in a JSON format. The JSON format is adopted, and thus, the data size indicating the movement pattern is further suppressed. Therefore, the processing load on the communication network and the terminal can be reduced and the avatar can be moved in real time in accordance with the behavior of the first user.

In the communication assistance system according to another aspect, the non-verbal behavior may include at least a visual line of the first user, and each movement pattern included in the movement pattern group may indicate at least the visual line of the avatar. The at least one processor may select the movement pattern indicating the visual line of the avatar corresponding to the visual line of the first user. The visual line that generally plays an important role in communication is reflected in the movement of the avatar, and thus, natural communication using an image can be attained. As a result thereof, creative interaction between the users can be attained.

In the communication assistance system according to another aspect, the non-verbal behavior may further include at least one of a posture, a motion, and a facial expression of the first user, and each movement pattern included in the movement pattern group may further indicate at least one of a posture, a motion, and a facial expression of the avatar. The at least one processor may select the movement pattern indicating at least one of the posture, the motion, and the facial expression of the avatar corresponding to at least one of the posture, the motion, and the facial expression of the first user. At least one of the posture, the motion, and the facial expression is reflected in the movement of the avatar, and thus, natural communication using an image can be attained.

In the communication assistance system according to another aspect, the movement pattern group may include a movement pattern indicating at least one of a rotation of an upper body of the avatar, a rotation of a neck of the avatar, and a movement of pupils of the avatar, which are performed in accordance with a change in the visual line of the avatar. Such a non-verbal behavior is expressed in accordance with the change in the visual line of the avatar, and thus, smooth communication or creative interaction between the users can be attained.

In the communication assistance system according to another aspect, the video data may include the image data and voice data. The at least one processor may separate the video data into the image data and the voice data, may analyze the image data and may select the movement pattern corresponding to the non-verbal behavior of the first user, and may transmit a set of non-verbal behavior data indicating the selected movement pattern and the voice data as the control data to the second terminal. The non-verbal behavior of the first user is reflected in the movement of the avatar and the voice of the first user is provided to the second terminal. The second user recognizes the motion and the voice of the avatar, and thus, is capable of attaining natural communication with the first user.

In the communication assistance system according to another aspect, the at least one processor may transmit shared item data indicating a shared item to each of the first terminal and the second terminal such that a virtual space including the shared item is displayed on each of the first terminal and the second terminal. The shared item is provided to each of the users, and thus, the second user is capable of attaining natural communication with the first user while sharing the item with the first user.

### [Detailed Description of Embodiments of Present Disclosure]

Hereinafter, an embodiment in the present disclosure will be described in detail with reference to the attached drawings. Note that, in the description of the drawings, the same reference numerals will be applied to the same or equivalent elements, and the repeated description will be omitted.

### (Configuration of System)

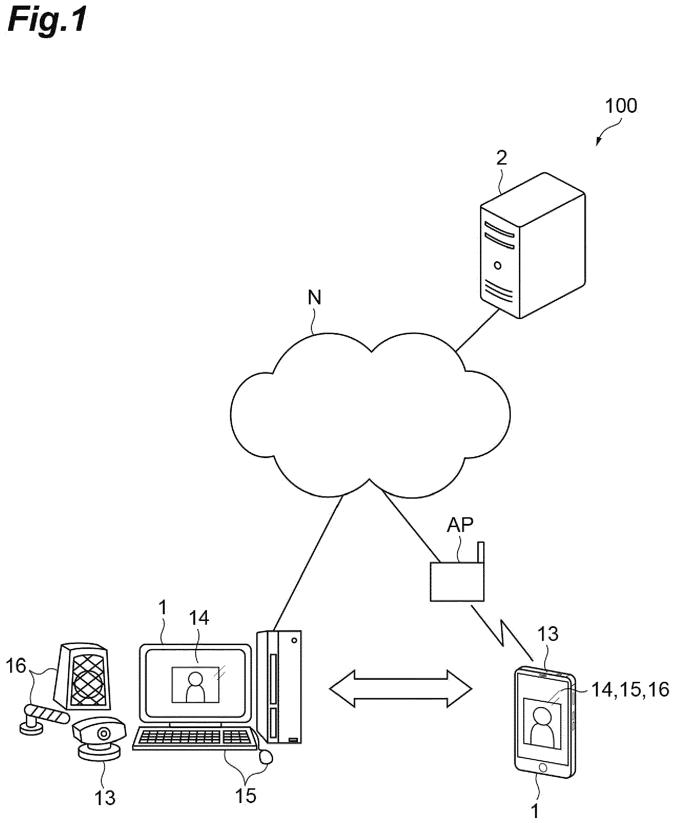

FIG. 1 is a diagram illustrating an example of the outline of a communication assistance system 100 according to an embodiment. The communication assistance system 100 is a computer system assisting communication between users. A utilization purpose of the communication assistance system 100 is not limited. For example, the communication assistance system 100 can be used for various purposes such as a video conference, chatting, medical examination, counseling, an interview (character evaluation), and telework.

The communication assistance system 100 includes a server 2 establishing a call session among a plurality of terminals 1. The plurality of terminals 1 are connected to the server 2 through a communication network N such that communication is performed, and thus, a call session with the other terminal 1 can be established. In a case where the communication assistance system 100 is configured by using the server 2, communication assistance is a type of cloud service. In FIG. 1, two terminals 1 are illustrated, but the number of terminals 1 to be connected to the communication assistance system 100 (in other words, the number of terminals 1 participating in one call session) is not limited.

The terminal 1 is a computer that is used by a user of the communication assistance system 100. The type of terminal 1 is not limited. For example, the terminal 1 may be a mobile phone, an advanced mobile phone (a smart phone), a tablet terminal, a desktop type personal computer, a laptop type personal computer, or a wearable terminal. As illustrated in FIG. 1, the terminal 1 includes an imaging unit 13, a display unit 14, a manipulation unit 15, and a voice input/output unit 16.

The user captures an image of the user themselves with the imaging unit 13 by operating the operating unit 15, and has a conversation with the other person through the voice input/output unit 16 while checking various information items (an avatar of the other person, a written document, and the like) displayed on the display unit 14. The terminal 1 generates video data by encoding and multiplexing the data of an image captured by the imaging unit 13 and a voice obtained by the voice input/output unit 16, and transmits the video data through the call session. The terminal 1 outputs an image based on the video data from the display unit 14. The terminal 1 receives video data that is transmitted from another terminal 1, and outputs an image and a voice based on the video data from the display unit 14 and the voice input/output unit 16.

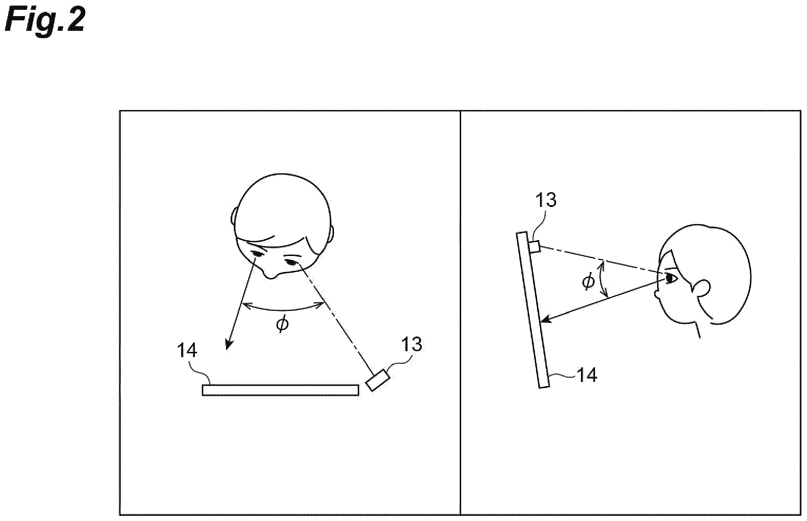

As illustrated in FIG. 1, there are various installation locations of the imaging unit 13. However, it is difficult to provide the imaging unit 13 in the display unit 14 (that is, to provide the imaging unit 13 in a location in which an image of the other person is displayed). In a case where a captured person image is directly displayed on the display unit 14 of the terminal 1 of the other person, a visual line of the person image is not directed toward the other person and slightly deviates therefrom. FIG. 2 is a diagram illustrating an example of a deviation of a visual line. As illustrated in FIG. 2, the deviation of the visual line occurs due to a parallactic angle φ that is a difference between a visual line of the user who looks at the display unit 14 and an optical axis of the imaging unit 13 capturing an image of the user. In a case where the parallactic angle φ is larger, it is difficult to match up the visual lines between the users, and thus, the user is frustrated in communication.

In order to assist natural communication by solving or alleviating such a situation, the communication assistance system 100 displays an avatar corresponding to a first user on the terminal 1 (a second terminal) of a second user. Then, the communication assistance system 100 moves the avatar such that a non-verbal behavior of the first user is naturally expressed by the second terminal on the basis of video data from the terminal 1 (a first terminal) of the first user. That is, the communication assistance system 100 moves the avatar such that the avatar that corresponds to the first user and is displayed on the second terminal is moved corresponding to the non-verbal behavior of the first user. For example, the communication assistance system 100 executes control such as directing a visual line of the avatar toward the other person (a person looking at the avatar through the display unit 14) or directing the direction of the body of the avatar toward a natural direction. In actuality, the parallactic angle φ as illustrated in FIG. 2 exists. However, the communication assistance system 100 does not directly display the first user that is imaged by the first terminal on the second terminal, but displays the avatar on the second terminal instead of the first user, and controls the non-verbal behavior of the avatar. The parallactic angle φ is finally corrected or solved by such processing, and thus, each of the users is capable of experiencing natural interaction.

The avatar is the alter ego of the user that is expressed in the virtual space expressed by a computer. The avatar is not the user themselves captured by the imaging unit 13 (that is, the user themselves indicated by the video data), but is displayed by an image material independent from the video data. An expression method of the avatar is not limited, and for example, the avatar may indicate an animation character, or may be represented by a realistic user image that is prepared in advance on the basis of the picture of the user. The avatar may be drawn by two-dimensional or three-dimensional computer graphic (CG). The avatar may be freely selected by the user.

The virtual space indicates a space that is expressed by the display unit 14 of the terminal 1. The avatar is expressed as an object existing in the virtual space. An expression method of the virtual space is not limited, and for example, the virtual space may be drawn by two-dimensional or three-dimensional CG, may be expressed by an image reflecting the actual world (a moving image or a still image), or may be expressed by both of the image and CG. As with the avatar, the virtual space (a background screen) may be freely selected by the user. The avatar may be disposed in an arbitrary position in the virtual space by the user. The communication assistance system 100 expresses the virtual space in which a common scene can be recognized by a plurality of users. Here, it should be noted that it is sufficient that the common scene is a scene that is capable of imparting common recognition to the plurality of users. For example, in the common scene, it is not required that a position relationship between the objects in the virtual space (for example, a position relationship between the avatars) is the same in the plurality of terminals 1.

The non-verbal behavior indicates a behavior not using a language in the behaviors of a person. The non-verbal behavior includes at least one of a visual line, a posture, a motion (including a gesture), and a facial expression, and may include other elements. In the present disclosure, elements configuring the non-verbal behavior such as the visual line, the posture, the motion, and the facial expression are also referred to as "non-verbal behavior elements". The non-verbal behavior of the user that is expressed by the avatar is not limited. Examples of the posture or the movement of the face include nodding, head bobbing, and head tilting. Examples of the posture or the movement of the upper body include a body direction, shoulder twisting, elbow bending, and hand raising and lowering. Examples of the motion of the finger include extension, bending, abduction, and adduction. Examples of the facial expression include indifference, delight, contempt, hate, fear, surprise, sadness, and anger.

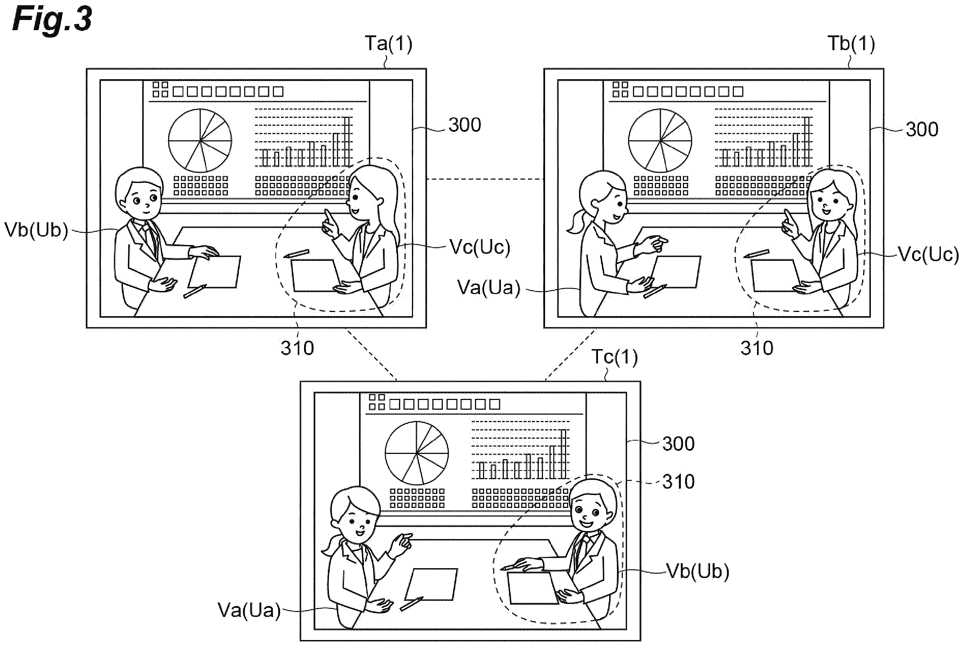

FIG. 3 to FIG. 5 are diagrams illustrating examples of the virtual space and the avatar that are provided by the communication assistance system 100. In such examples, a call session is established among three terminals 1, and three terminals 1 are classified into a terminal Ta of a user Ua, a terminal Tb of a user Ub, and a terminal Tc of a user Uc. Avatars corresponding to the users Ua, Ub, and Uc are avatars Va, Vb, and Vc, respectively. A virtual space 300 that is provided to three users emulates a dialogue in a conference room. The virtual space that is displayed on the display unit 14 of each of the terminals includes the avatar of the other persons. That is, the virtual space 300 on the terminal Ta includes the avatars Vb and Vc, the virtual space 300 on the terminal Tb includes the avatars Va and Vc, and the virtual space 300 on the terminal Tc includes the avatars Va and Vb.

The example of FIG. 3 corresponds to a situation in which the user Ua is looking at the avatar Vc on the terminal Ta, the user Ub is looking at the avatar Vc on the terminal Tb, and the user Uc is looking at the avatar Vb on the terminal Tc. In a case where such a situation is replaced with the actual world (the world in which the users Ua, Ub, and Uc actually exist), the user Ua is looking at the user Uc, the user Ub is looking at the user Uc, and the user Uc is looking at the user Ub. Therefore, the users Ub and Uc are looking at each other. The virtual space 300 is displayed on each of the terminals by the communication assistance system 100 as follows. That is, on the terminal Ta, a scene is displayed in which the avatar Vb and the avatar Vc face each other. On the terminal Tb, a scene is displayed in which the avatar Va is looking at the avatar Vc, and the avatar Vc is looking at the user Ub through the display unit 14 of the terminal Tb. On the terminal Tc, a scene is displayed in which both of the avatars Va and Vb are looking at the user Uc through the display unit 14 of the terminal Tb. In any terminal, a scene in which the user Ua is looking at the user Uc, the user Ub is looking at the user Uc, and the user Uc is looking at the user Ub (therefore, the users Ub and Uc are looking at each other) is expressed by the virtual space 300.

In the example of FIG. 3, the virtual space 300 on the terminal Ta expresses visual line matching between the users Ub and Uc who are the other people for the user Ua. The virtual space 300 on the terminal Tb represents a state in which the visual line of the user Uc is directed toward the user Ub, and the virtual space 300 on the terminal Tc represents a state in which the visual line of the users Ua and Ub is directed toward the user Uc. That is, all of the virtual spaces 300 on the terminals Tb and Tc express visual line recognition.

As illustrated in FIG. 3, the communication assistance system 100 may further display an auxiliary expression 310 indicating a region (a notable region) at which the user of the terminal is actually looking.

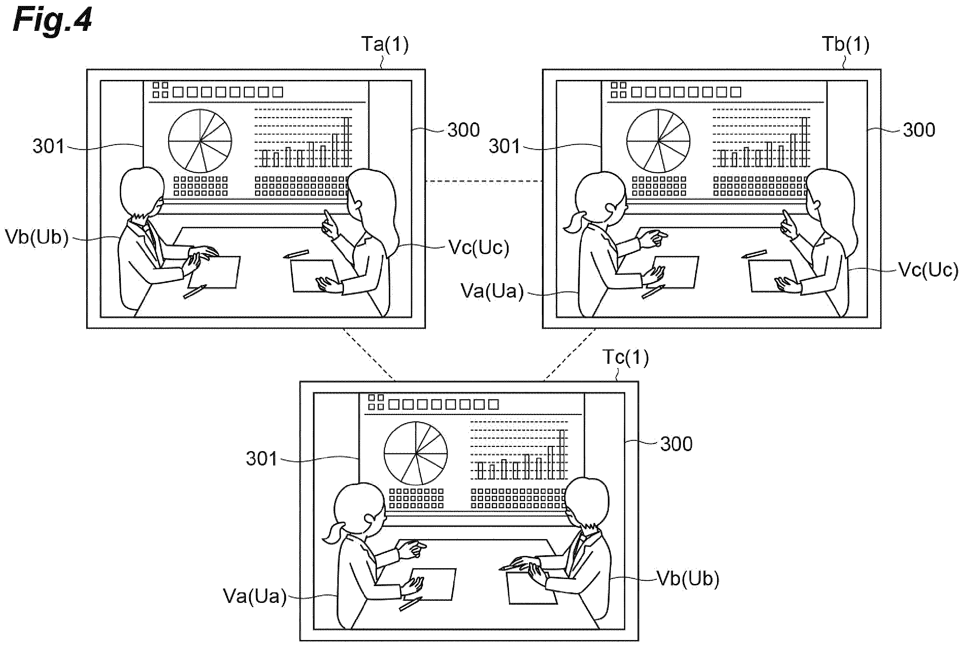

The example of FIG. 4 corresponds to a situation in which each of the users is looking at a common presentation document 301 through each of the terminals. A display method of the presentation document 301 on each of the terminals is not limited, and for example, each of the terminals may display a virtual space including the presentation document 301, or may display the presentation document 301 in a display region different from the virtual space. In a case where such a situation is replaced with the actual world, the users Ua, Ub, and Uc are looking at the same presentation document 301. The virtual space 300 is display on each of the terminals by the communication assistance system 100 as follows. That is, on the terminal Ta, a scene is displayed in which the avatars Vb and Vc are looking at the presentation document 301. On the terminal Tb, a scene is displayed in which the avatars Va and Vc are looking at the presentation document 301. On the terminal Tc, a scene is displayed in which the avatars Va and Vb are looking at the presentation document 301. All of the terminals express a scene in which three people are looking at the same presentation document 301 by the virtual space 300, and this indicates joint attention (joint-visual sensation).

The communication assistance system 100 may express at least one movement of the rotation of the upper body, the rotation of the neck, and the movement of the pupils with respect to the avatar at the time of expressing the visual line matching, the visual line recognition, or the joint attention. The visual line matching, the visual line recognition, and the joint attention are expressed by using the avatar, and thus, interaction for exchanging emotions is attained, which is capable of leading to smooth communication, creative interaction, and the like.

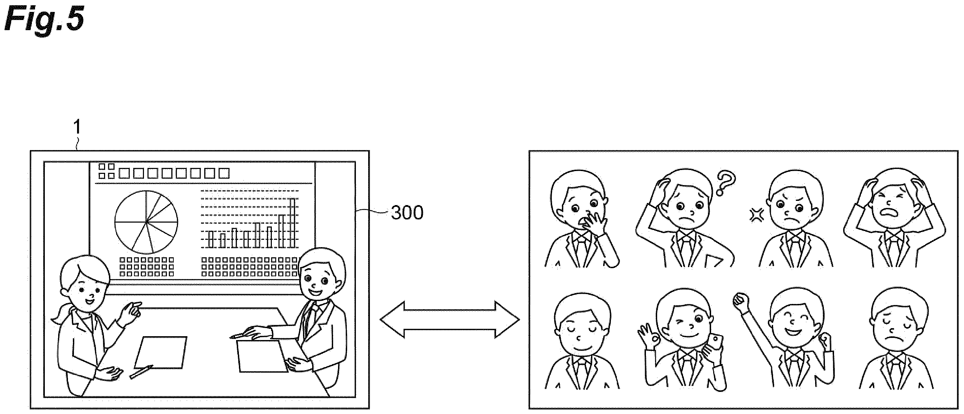

FIG. 5 illustrates several examples of the movement pattern of the avatar that can be expressed in the virtual space 300. For example, the communication assistance system 100 expresses various non-verbal behaviors of the user, such as smile, surprise, question, anger, uneasiness, consent, acceptation, delight, rumination, and eye contact, by converting the non-verbal behaviors into the movement of the avatar (for example, the visual line, the posture, the motion, the facial expression, and the like). As illustrated in FIG. 5, the movement of the avatar may be expressed by including a symbol such as a question mark. The communication assistance system 100 moves the avatar in various modes, and thus, the visual line matching, the visual line recognition, the joint attention, the eye contact, and the like are expressed by the avatar. Accordingly, each of the users is capable of attaining natural and smooth communication with the other person.

Further, the user is capable of attaining communication without allowing the other person to recognize the actual video in which the own face and the own place are reflected, by introducing the avatar. This is capable of contributing to the improvement of user security (for example, the protection of individual information). The introduction of the avatar also helps the protection of the privacy of the user themselves. For example, cloth changing, makeup, and the like, which are required to be considered at the time of using the actual image, are not necessary. In addition, it is not necessary for the user to excessively care about an imaging position and an imaging condition such as light at the time of setting the imaging unit 13.

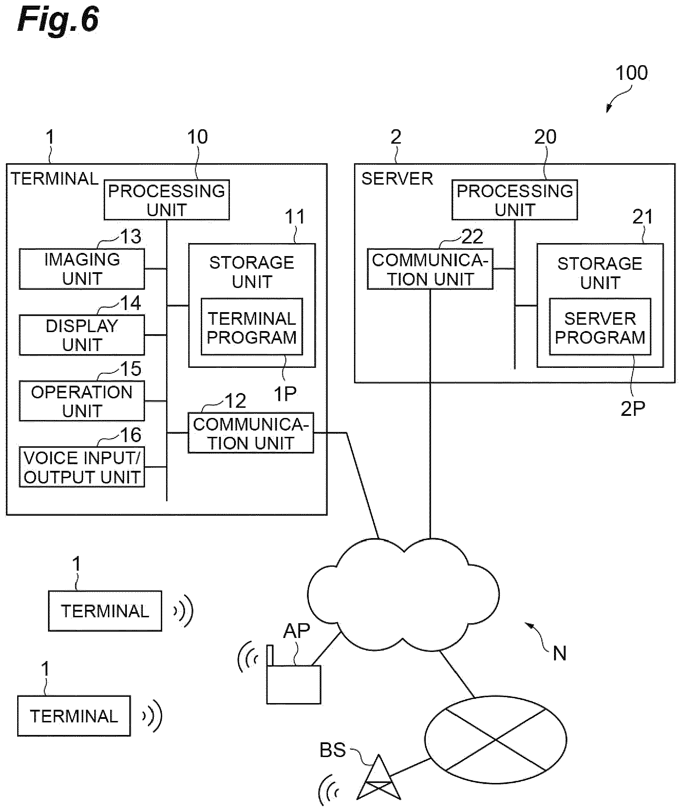

FIG. 6 is a diagram illustrating an example of a hardware configuration relevant to the communication assistance system 100. The terminal 1 includes a processing unit 10, a storage unit 11, a communication unit 12, the imaging unit 13, the display unit 14, the operation unit 15, and the voice input/output unit 16. The storage unit 11, the imaging unit 13, the display unit 14, the operation unit 15, and the voice input/output unit 16 may be an external device that is connected to the terminal 1.

The processing unit 10 can be configured by using a processor such as a central processing unit (CPU) and graphics processing unit (GPU), a clock, and a built-in memory. The processing unit 10 may be configured as one hardware (system on a chip: SoC) in which the processor, the clock, the built-in memory, the storage unit 11, and the communication unit 12 are integrated. The processing unit 10 is operated on the basis of a terminal program IP (an image control program) that is stored in the storage unit 11, and thus, allows a general-purpose computer to function as the terminal 1.

The storage unit 11 can be configured by using a non-volatile storage medium such as a flash memory, a hard disk, and a solid state disk (SSD). The storage unit 11 stores the terminal program IP and information that is referred to by the processing unit 10. In order to determine (authenticate) the validness of the user of the terminal 1, the storage unit 11 may store a user image, or a feature amount obtained from the user image (a vectorized feature amount group). The storage unit 11 may store one or a plurality of avatar images, or a feature amount of each of the one or the plurality of avatar images.

The communication unit 12 is configured by using a network card or a wireless communication device, and attains communication connection to the communication network N.

The imaging unit 13 outputs a video signal that is obtained by using a camera module. The imaging unit 13 includes an internal memory, captures a frame image from the video signal that is output from the camera module at a predetermined frame rate, and stores the frame image in the internal memory. The processing unit 10 is capable of sequentially acquiring the frame image from the internal memory of the imaging unit 13.

The display unit 14 is configured by using a display device such as a liquid crystal panel or an organic EL display. The display unit 14 outputs an image by processing image data that is generated by the processing unit 10.

The operation unit 15 is an interface that accepts the operation of the user, and is configured by using a physical button, a touch panel, a microphone 16b of the voice input/output unit 16, and the like. The operation unit 15 may accept the operation through a physical button or an interface displayed on a touch panel. Alternatively, the operation unit 15 may recognize the specifics of the operation by processing a voice input by the microphone 16b, or may accept the operation in an interaction format using the voice output from a speaker 16a.

The voice input/output unit 16 is configured by using the speaker 16a and the microphone 16b. The voice input/output unit 16 outputs a voice based on the video data from the speaker 16a, and digitally converts the voice obtained by using the microphone 16b into voice data.

The server 2 is configured by using one or a plurality of server computers. The server 2 may be attained by logically a plurality of virtual machines that are operated by one server computer. In a case where the plurality of server computers are physically used, the server 2 is configured by connecting the server computers to each other through the communication network. The server 2 includes a processing unit 20, a storage unit 21, and a communication unit 22.

The processing unit 20 is configured by using a processor such as a CPU or a GPU. The processing unit 20 is operated on the basis of a server program 2P (a communication assistance program) that is stored in the storage unit 21, and thus, allows a general-purpose computer to function as the server 2.

The storage unit 21 is configured by using a non-volatile storage medium such as a hard disk and a flash memory. Alternatively, a database that is an external storage device may function as the storage unit 21. The storage unit 21 stores the server program 2P, and information that is referred to by the processing unit 20.

The communication unit 22 is configured by using a network card or a wireless communication device, and attains communication connection to the communication network N. The server 2 attains the communication connection through the communication network N by the communication unit 22, and thus, a call session is established in two or more arbitrary number of terminals 1. Data communication for a call session may be more safely executed by encryption processing or the like.

The configuration of the communication network N is not limited. For example, the communication network N may be constructed by using the internet (a public network), a communication carrier network, a provider network of a provider attaining the communication assistance system 100, a base station BS, an access point AP, and the like. The server 2 may be connected to the communication network N from the provider network.

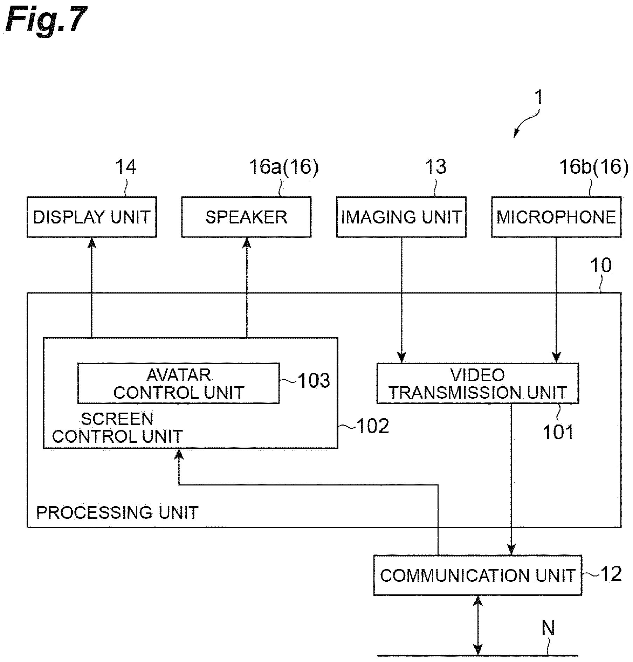

FIG. 7 is a diagram illustrating an example of a function configuration of the processing unit 10 of the terminal 1. The processing unit 10 includes a video transmission unit 101 and a screen control unit 102 as a function element. Such function elements are attained by operating the processing unit 10 in accordance with the terminal program IP.

The video transmission unit 101 is a function element transmitting the video data representing the user of the terminal 1 to the server 2. The video transmission unit 101 generates the video data by multiplexing image data indicating a set of frame images input from the imaging unit 13 (hereinafter, referred to as "frame image data") and voice data input from the microphone 16b. The video transmission unit 101 attains synchronization between the frame image data and the voice data on the basis of a time stamp. Then, the video transmission unit 101 encodes the video data, and transmits the encoded video data to the server 2 by controlling the communication unit 12. A technology used for encoding the video data is not limited. For example, in the video transmission unit 101, a moving image compression technology such as H.265 may be used, or voice encoding such as advanced audio coding (AAC) may be used.

The screen control unit 102 is a function element controlling a screen corresponding to a call session. The screen control unit 102 displays the screen on the display unit 14 in response to the start of the call session. The screen indicates a virtual space including at least the avatar corresponding to the other person. The configuration of the virtual space is not limited, and may be designed by an arbitrary policy. For example, the virtual space may emulate a conference scene or a conference room. The virtual space may include an item which is provided from the server 2 and is shared among the terminals 1 (an item displayed on each of the terminals 1). In the present disclosure, the item is referred to as a "shared item". The type of shared item is not limited. For example, the shared item may represent furniture and fixtures such as a desk and a whiteboard, or may represent a shared document that can be browsed by each of the users.

The screen control unit 102 includes an avatar control unit 103 controlling the avatar in the screen. The avatar control unit 103 moves the avatar in the screen on the basis of control data that is transmitted from the server 2 and is received by the communication unit 12. The control data includes non-verbal behavior data for reflecting the non-verbal behavior of the first user, who is the other person, in the avatar, and voice data indicating the voice of the user. The avatar control unit 103 controls movement of the avatar that is displayed on the display unit 14 on the basis of the non-verbal behavior data. Further, the avatar control unit 103 outputs the voice from the speaker 16a by processing the voice data such that the movement of the avatar is synchronized with the voice of the user.

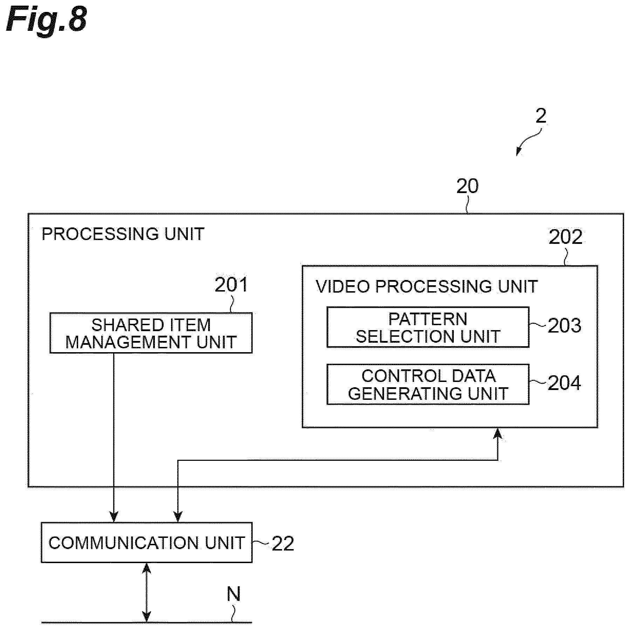

FIG. 8 is a diagram illustrating an example of a function configuration of the processing unit 20 of the server 2. The processing unit 20 includes a shared item management unit 201 and a video processing unit 202 as a function element. Such function elements are attained by operating the processing unit 20 in accordance with the server program 2P.

The shared item management unit 201 is a function element managing the shared item. The shared item management unit 201 transmits shared item data indicating the shared item to each of the terminals 1 in response to the start of the call session or in response to a request signal from an arbitrary terminal 1. According to such transmission, the shared item management unit 201 displays a virtual space including the shared item on each of the terminals 1. The shared item data may be stored in advance in the storage unit 21, or may be included in the request signal from a specific terminal 1.

The video processing unit 202 is a function element that generates the control data on the basis of the video data that has been transmitted from the first terminal, and transmits the control data to the second terminal. The video processing unit 202 separates the video data into the frame image data and the voice data, and specifies a movement pattern corresponding to the non-verbal behavior of the first user from the frame image data. The movement pattern indicates the form or the type of movement of the avatar that is expressed by systematizing or simplifying the non-verbal behavior of the user that is indicated by the video data. A specific non-verbal behavior of a person is capable of infinitely existing on the basis of the visual line, the facial expression, the body direction, a hand motion, or two or more arbitrary combinations thereof. The video processing unit 202 systematizes or simplifies an infinite non-verbal behavior into a finite number of movement patterns. Then, the video processing unit 202 transmits a combination of the non-verbal behavior data indicating the selected movement pattern and the voice data separated from the video data as the control data to the second terminal. The non-verbal behavior data is used for reflecting the non-verbal behavior of the first user in the avatar.

The video processing unit 202 includes a pattern selection unit 203 and a control data generating unit 204. The pattern selection unit 203 analyzes the frame image data that is separated from the video data, and selects the movement pattern corresponding to the non-verbal behavior of the first user from a movement pattern group of the avatar. In the communication assistance system 100, the infinite non-verbal behavior is compiled into the finite number of movement patterns, and information indicating each of the movement patterns is stored in advance in the storage unit 21. The movement of the avatar is patterned, and thus, a data amount for controlling the avatar is suppressed, and therefore, a communication amount can be greatly reduced. The pattern selection unit 203 reads out the movement pattern corresponding to the non-verbal behavior of the first user with reference to the storage unit 21. The control data generating unit 204 transmits a combination of the non-verbal behavior data indicating the selected movement pattern and the voice data separated from the video data as the control data to the second terminal.

### (Operation of System)

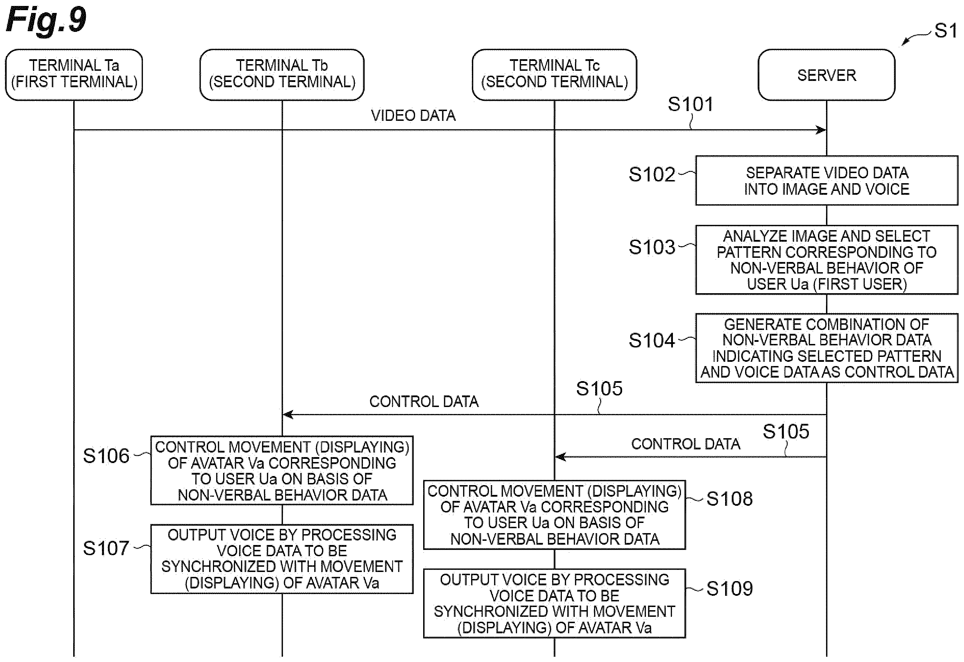

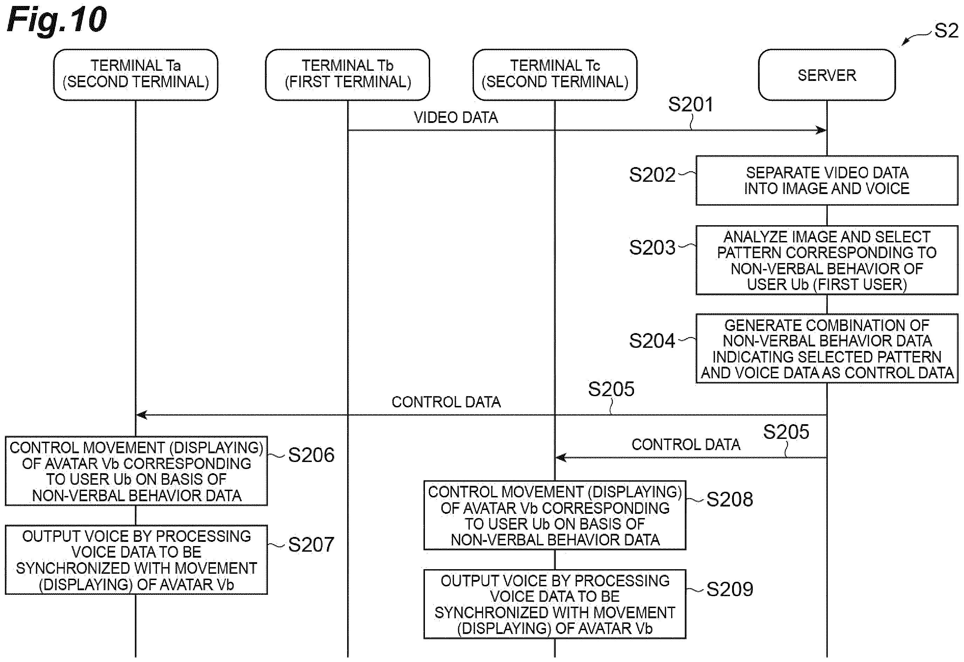

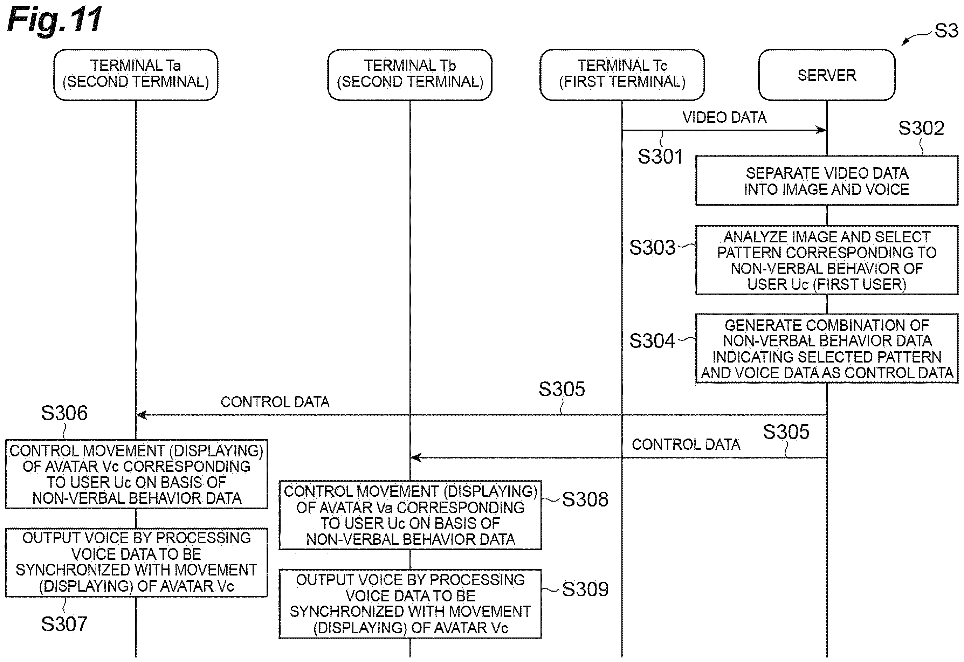

The operation of the communication assistance system 100 will be described and a communication assistance method according to this embodiment will be described, with reference to FIG. 9 to FIG. 11. FIG. 9 to FIG. 11 are all sequence diagrams illustrating an example of the operation of the communication assistance system 100. All processings illustrated in FIG. 9 to FIG. 11 are premised on the fact that three users log in the communication assistance system 100 and a call session is established in three terminals 1. Three terminals 1 are classified into the terminal Ta of the user Ua, the terminal Tb of the user Ub, and the terminal Tc of the user Uc, as necessary. The avatars corresponding to the users Ua, Ub, and Uc indicate the avatars Va, Vb, and Vc, respectively. As a processing flow S1, FIG. 9 illustrates processing of moving the avatar Va, that is displayed on the terminals Tb and Tc (the second terminal), on the basis of the video data from the terminal Ta (the first terminal) capturing an image of the user Ua (the first user). As a processing flow S2, FIG. 10 illustrates processing of moving the avatar Vb, that is displayed on the terminals Ta and Tc (the second terminal), on the basis of the video data from the terminal Tb (the first terminal) capturing an image of the user Ub (the first user). As a processing flow S3, FIG. 11 illustrates processing of moving the avatar Vc, that is displayed on the terminals Ta and Tb (the second terminal), on the basis of the video data from the terminal Tc (the first terminal) capturing an image of the user Uc (the first user).

The state (the posture) of the avatar in the virtual space immediately after the call session is established may be arbitrarily designed. For example, the avatar control unit 103 of each of the terminals 1 may display the avatar to represent a state in which each of one or more avatars sits slantingly with respect to the display unit 14 (the screen) and is directed downward. The screen control unit 102 or the avatar control unit 103 of each of the terminals 1 may display the name of each of the avatars on the display unit 14.

The processing flow S 1 will be described with reference to FIG. 9. In step S101, the video transmission unit 101 of the terminal Ta transmits the video data representing the user Ua to the server 2. In the server 2, the video processing unit 202 receives the video data.

In step S102, the video processing unit 202 separates the video data into the frame image data and the voice data.

In step S103, the pattern selection unit 203 analyzes the frame image data and selects the movement pattern corresponding to the non-verbal behavior of the user Ua from the movement pattern group of the avatar. Each of the movement patterns that can be selected corresponds to at least one non-verbal behavior element. For example, a movement pattern corresponding to the visual line indicates the visual line of the avatar. A movement pattern corresponding to the posture indicates at least one of the directions (for example, at least one direction of the face and the body) and the motion of the avatar. A movement pattern corresponding to the motion, for example, indicates hand waving, head shaking, face tilting, nodding, and the like. A pattern corresponding to the facial expression indicates a facial expression (smile, troubled look, angry look, and the like) of the avatar. Each of the movement patterns included in the movement pattern group may indicate a non-verbal behavior represented by a combination of one or more non-verbal behavior elements. For example, each of the movement patterns may be a non-verbal behavior represented by a combination of the visual line and the posture, or may be a non-verbal behavior represented by a combination of the visual line, the posture, the motion, and the facial expression. Alternatively, a finite number of given movement patterns may be prepared for each of the non-verbal behavior elements. For example, a movement pattern group for the visual line and a movement pattern group for the posture may be prepared. In a case where a plurality of movement patterns are prepared for each of the non-verbal behavior elements, the pattern selection unit 203 selects one movement pattern with respect to one or more non-verbal behavior elements. The number of movement patterns included in the movement pattern group is not limited. For example, in order to slightly exaggeratedly express the non-verbal behavior of the user with the avatar, approximately 10 stages of movement patterns may be prepared in advance for each of the non-verbal behavior elements.

In a case where the movement pattern corresponding to the visual line is selected, the pattern selection unit 203 selects a movement pattern indicating the visual line of the avatar Va such that the visual line of the avatar Va in the virtual space corresponds to the visual line of the user Ua that is indicated by the frame image data. In a case where the user Ua is looking at the avatar Vb in the virtual space through the display unit 14 of the terminal Ta, the pattern selection unit 203 selects a movement pattern in which the visual line of the avatar Va is directed toward the avatar Vb (the user Ub). In this case, on the terminal Tb, the avatar Va is displayed to be directed toward the user Ub through the display unit 14, and on the terminal Tc, the avatar Va is displayed to be directed toward the avatar Vb in the virtual space.

The movement pattern group may include a movement pattern indicating the non-verbal behavior that is performed in accordance with a change in the visual line of the avatar. For example, the movement pattern group may include a movement pattern indicating at least one of the rotation of the upper body of the avatar, the rotation of the neck of the avatar, and the movement of the pupils of the avatar, which are performed in accordance with a change in the visual line of the avatar.

A technology relevant to the analysis of the frame image data and the selection of the movement pattern is not limited. For example, the pattern selection unit 203 may select the movement pattern by using artificial intelligence (AI), and for example, may select the movement pattern by using machine learning that is a type of AI. The machine learning is a method of autonomically figuring out a law or a rule by performing iterative learning on the basis of the given information. Examples of the machine learning include deep learning. The deep learning is machine learning using a multi-layer neural network (a deep neural network (DNN)). The neural network is an information processing model emulating the mechanism of the human cranial nerve system. However, the type of machine learning is not limited to the deep learning, and an arbitrary learning method may be used in the pattern selection unit 203.

In the machine learning, a learning model is used. The learning model is an algorithm in which vector data indicating the image data is processed as an input vector, and vector data indicating the non-verbal behavior is output as an output vector. The learning model is the best calculation model that is estimated to have the highest prediction accuracy, and thus, can be referred to as the "best learning model". However, it is noted that the best learning model is not limited to "being the best in reality". The best learning model is generated by given computer processing training data including a plurality of combinations of a set of images representing a person and the movement pattern of the non-verbal behavior. A set of movement patterns of the non-verbal behavior that is indicated by the training data corresponds to the movement pattern group. The given computer inputs the input vector indicating the person image to the learning model, and thus, calculates the output vector indicating the non-verbal behavior, and obtains an error between the output vector and the non-verbal behavior that is indicated by the training data (that is, a difference between an estimation result and a correct solution). Then, the computer updates given movement parameters in the learning model on the basis of the error. The computer generates the best learning model by repeating such learning, and the learning model is stored in the storage unit 21. The computer generating the best learning model is not limited, and for example, may be the server 2, or may be a computer system other than the server 2. The processing of generating the best learning model can be referred to as a learning phase.

The pattern selection unit 203 selects the movement pattern by using the best learning model that is stored in the storage unit 21. In contrast with the learning phase, the use of the learning model by the pattern selection unit 203 can be referred to as an operation phase. The pattern selection unit 203 inputs the frame image data as the input vector to the learning model, and thus, obtains the output vector indicating the pattern corresponding to the non-verbal behavior of the user Ua. The pattern selection unit 203 may extract the region of the user Ua from the frame image data, and may input the region to be extracted as the input vector to the learning model, and thus, may obtain the output vector. In any case, the output vector indicates the pattern that is selected from the finite number of given patterns.

Alternatively, the pattern selection unit 203 may select the movement pattern without using the machine learning. Specifically, the pattern selection unit 203 extracts the region of the user Ua from each of the set of frame images, and specifies the motion of the upper body including the face from the region to be extracted. For example, the pattern selection unit 203 may specify at least one non-verbal behavior element of the user Ua on the basis of a change in a feature amount of a set of regions to be extracted. The pattern selection unit 203 selects a movement pattern corresponding to the at least one non-verbal behavior element from the movement pattern group.

In a case where the pattern selection unit 203 is not capable of selecting the movement pattern on the basis of the frame image data, the pattern selection unit 203 may select a given specific movement pattern (for example, a movement pattern indicating the initial state of the avatar Va).

In step S104, the control data generating unit 204 generates a combination of the non-verbal behavior data indicating the selected movement pattern and the voice data as the control data. The control data generating unit 204 generates the non-verbal behavior data in which the selected movement pattern is expressed in a text (that is, a character string) without using an image. For example, the control data generating unit 204 may generate the non-verbal behavior data by describing the selected movement pattern in a JavaScript object notation (JSON) format. Alternatively, the control data generating unit 204 may generate the non-verbal behavior data by describing the movement pattern in other formats such as an extensible markup language (XML). The control data generating unit 204 may generate the control data in which the non-verbal behavior data and the voice data are integrated, or may regard a set of the non-verbal behavior data and the voice data that exist separately as the control data. Therefore, a physical structure of the control data is not limited. In any case, the control data generating unit 204 attains synchronization between the frame image data and he voice data on the basis of a time stamp.

In step S105, the control data generating unit 204 transmits the control data to the terminals Tb and Tc. The physical structure of the control data is not limited, and thus, a transmission method of the control data is not also limited. For example, the control data generating unit 204 may transmit the control data in which the non-verbal behavior data and the voice data are integrated. Alternatively, the control data generating unit 204 may transmit a set of the non-verbal behavior data and the voice data that are physically independent from each other, and thus, may transmit the control data to the terminals Tb and Tc. In each of the terminals Tb and Tc, the screen control unit 102 receives the control data.

In the terminal Tb, the processing of steps S106 and S107 is executed. In step S106, the avatar control unit 103 of the terminal Tb controls the movement (displaying) of the avatar Va corresponding to the user Ua on the basis of the non-verbal behavior data. The avatar control unit 103 moves the avatar Va that is displayed on the display unit 14 of the terminal Tb, in accordance with the movement pattern that is indicated by the non-verbal behavior data. For example, the avatar control unit 103 moves the avatar Va by executing animation control of changing at least one of the visual line, the posture, the motion, and the facial expression of the avatar Va from the current state to the next state that is indicated by the movement pattern. In an example, according to such control, the avatar Va matches up the visual line with the user Ub while performing at least one movement of the rotation of the upper body, the rotation of the neck, and the movement of the pupils. In a scene in which the avatar Va is looking at the user Ub through the display unit 14 (that is, a scene in which the visual line of the avatar Va is matched up with the user Ub), the avatar control unit 103 may produce the facial expression of the avatar Va in association with the visual line matching. For example, the avatar control unit 103 may produce the facial expression of the avatar Va by a method of enlarging the eyes only for a constant time (for example, 0.5 to 1 seconds), a method of raising the eyebrows, a method of raising the mouth corner, or the like, and thus, may emphasize the visual line matching (that is, the eye contact).

In step S 107, the avatar control unit 103 of the terminal Tb outputs the voice from the speaker 16a by processing the voice data to be synchronized with the movement (displaying) of the avatar Va. The avatar control unit 103 may further move the avatar Va on the basis of the output voice. For example, the avatar control unit 103 may change the mouth of the avatar Va, may change the face corresponding to the facial expression or the emotion of the user Ua, or may move the arms or the hands.

According to the processing of steps S106 and S107, the user Ub listens to the speech of the user Ua and is capable of recognizing the current non-verbal behavior of the user Ua (for example, at least one of the visual line, the posture, the motion, and the facial expression) through the avatar Va.

In addition to the processing of steps S106 and S107, the screen control unit 102 of the terminal Tb may further display the region (the notable region) at which the user Ub is actually looking on the display unit 14. For example, the screen control unit 102 may estimate the visual line of the user Ub by analyzing the frame image data that is obtained from the imaging unit 13, and may display the auxiliary expression 310 illustrated in FIG. 3 on the display unit 14 on the basis of an estimation result.

In the terminal Tc, the processing of steps S108 and S109 that is the same as that of steps S106 and S107 is executed. According to such a set of processings, the user Uc listens to the speech of the user Ua and is capable of recognizing the current non-verbal behavior of the user Ua (for example, at least one of the visual line, the posture, the motion, and the facial expression) through the avatar Va.

The communication assistance system 100 executes the processing flows S2 and S3 in parallel with the processing flow S1. The processing flow S2 illustrated in FIG. 10 includes steps S201 to S209 corresponding to steps S101 to S109. The processing flow S3 illustrated in FIG. 11 includes steps S301 to S309 corresponding to steps S101 to S109. The processing flows S1 to S3 are processed in parallel, and thus, on each of the terminals 1, the speech and the non-verbal behavior of each of the users are expressed by each of the avatars in real time.

### [Modification Example]

As described above, the detailed description has been made on the basis of the embodiment of the present disclosure. However, the present disclosure is not limited to the embodiment described above. The present disclosure can be variously modified within a range not departing from the gist thereof.

In the embodiment described above, the communication assistance system 100 is configured by using the server 2, but the communication assistance system may be applied to a peer-to-peer call session between the terminals not using the server 2. In such a case, each function element of the server 2 may be mounted on any one of the first terminal and the second terminal, or may be separately mounted on the first terminal and the second terminal. Therefore, at least one processor of the communication assistance system may be positioned in the server, or may be positioned in the terminal.

In the present disclosure, an expression of "at least one processor executes the first processing, executes the second processing, ···, and executes the n-th processing." is a concept including a case in which an execution subject (that is, a processor) of n processings of the first processing to the n-th processing is changed in the middle. That is, such an expression is a concept including both of a case in which all of the n processings are executed by the same processor and a case in which the processor is changed in the n processings by an arbitrary policy.

The video data and the control data may not include the voice data. That is, the communication assistance system may be used for assisting communication without a voice (for example, a sign language).

Each device in the communication assistance system 100 includes a computer that is configured by including a microprocessor and a storage unit such as a ROM and a RAM. The processing unit such as a microprocessor reads out a program including a part or all of the steps described above from the storage unit and executes the program. The program can be installed in each computer from an external server device or the like. The program of each of the devices may be distributed in a state of being stored in a recording medium such as a CD-ROM, a DVD-ROM, and a semiconductor memory, or may be distributed through a communication network.

A processing procedure of the method that is executed by at least one processor is not limited to the example in the embodiment described above. For example, a part of the steps (the processings) described above may be omitted, or each of the steps may be executed in another order. Two or more arbitrary steps of the steps described above may be combined, or a part of the steps may be corrected or deleted. Alternatively, other steps may be executed in addition to each of the steps described above.

The embodiment above describes an example in which the avatar is moved on the basis of the pattern that is selected corresponding to the non-verbal behavior of the user. However, information other than the non-verbal behavior, for example, voice information of the user may also be used for selecting the pattern. Examples of the voice information of the user include the voice of the user and the language of the user. In a case where such pattern selection is implemented, for example, the following processing is performed in the communication assistance system 100.

In the server 2, the pattern selection unit 203 of the video processing unit 202 analyzes not only the frame image data separated from the video data as described above, but also the voice data separated from the video data, more specifically, the voice and the language of the first user. The voice of the first user is information of a sound produced by the first user, and may be the voice data itself. The language of the first user is a semantic content of the voice of the first user, and for example, is obtained by executing voice recognition processing with respect to the voice data. The pattern selection unit 203 analyzes not only the frame image data but also the voice and the language, and thus, selects the movement pattern corresponding to the non-verbal behavior and the voice information of the first user.

In the pattern selection described above, as described above, artificial intelligence (AI) may be used. In this case, in a case where the video data of the user, or the video data of the user and data based on the video data, are input, the learning model that is stored in the storage unit 21 may be a learned model generated by using the training data such that information indicating the pattern corresponding to the non-verbal behavior and the voice information of the user is output. The video data is the frame image data and the voice data included in the video data. The data based on the video data is data corresponding to the "language" described above, and for example, is a voice recognition result of the voice data included in the video data. In a case where the voice recognition processing is executed inside the learning model, the frame image data and the voice data may be input to the learning model. In a case where the voice recognition processing is executed outside the learning model, the frame image data, the voice data, and a voice recognition processing result thereof may be input to the learning model. In the latter case, the pattern selection unit 203 executes preprocessing of obtaining the voice recognition processing result of the voice data before using the learning model. In the voice recognition processing, various known methods (a voice recognition processing engine or the like) may be used. The function of the voice recognition processing may be provided in the pattern selection unit 203 or the learning model, or may be provided in the other part of the server 2 or outside the server 2 (another server or the like) such that the function can be used by the pattern selection unit 203 or the learning model.

Examples of the training data described above may include a teacher data group in which the video data of the user or the video data of the user and the data based on the video data, and the information indicating the movement pattern corresponding to the non-verbal behavior and the voice information of the user are stored in association with each other. Input data (the video data of the user, or the like) in the training data may be acquired by monitoring the usual communication style of the user with a camera, a microphone, or the like. Output data (the information indicating the pattern) in the training data, for example, may be selected by the user, people involved with the user, experts, or the like, or may be automatically selected by using known classification processing or the like.

The learning model may be an aspect of the program or based on the program, and may be stored in the storage unit 21 (FIG. 6) as a part of the server program 2P. The learning model that is stored in the storage unit 21 may be updated in a timely manner.

The pattern selection unit 203 may select the pattern without using the learning model. In the case of the voice of the user, for example, the volume of voice, a tone, a pace, and the like may be reflected in the pattern selection. In the case of the language of the user, for example, the type of word, a context, and the like may be reflected in the pattern selection.

As described above, not only the non-verbal behavior of the first user but also the voice information of the first user are reflected in the movement of the avatar, and thus, the emotion, the motion, and the like of the first user can be more accurately reproduced, and smoother communication can be attained. The training data used for generating the learning model is prepared by big data analysis, and thus, the effect described above is further enhanced. In a case where the learning model is generated for each of the users (in a case where the learning model is customized), the emotion and the motion of the user can be more suitably reproduced.

### Reference Signs List

100: communication assistance system, 1: terminal, 10: processing unit, 11: storage unit, 12: communication unit, 13: imaging unit, 14: display unit, 15: manipulation unit, 16: voice input/output unit, 16b: microphone, 16a: speaker, 101: video transmission unit, 102: screen control unit, 103: avatar control unit, 2: server, 20: processing unit, 21: storage unit, 22: communication unit, 201: shared item management unit, 202: video processing unit, 203: pattern selection unit, 204: control data generating unit, Ua, Ub, Uc: user, Ta, Tb, Tc: terminal, Va, Vb, Vc: avatar, 300: virtual space, 301: presentation document, IP: terminal program, 2P: server program, BS: base station, AP: access point, N: communication network.

## Claims

1. A communication assistance system assisting communication between a first user corresponding to a first terminal and a second user corresponding to a second terminal, the system comprising:
at least one processor,
wherein the at least one processor
receives video data representing the first user from the first terminal,
analyzes the video data and selects a movement pattern corresponding to a non-verbal behavior of the first user from a movement pattern group of an avatar, and
transmits control data indicating the selected movement pattern to the second terminal such that an avatar corresponding to the first user in a virtual space displayed on the second terminal is moved based on the selected movement pattern.

2. The communication assistance system according to claim 1,
wherein the at least one processor selects a movement pattern corresponding to the non-verbal behavior of the first user and voice information of the first user by using a learning model, and
the learning model is a learned model that is generated by using training data such that information indicating a movement pattern corresponding to a non-verbal behavior of the user and voice information of the user is output when video data of a user or the video data of the user and data based on the video data are input.

3. The communication assistance system according to claim 2,
wherein the voice information of the first user includes a voice and a language of the first user, and
the video data of the user or the data based on the video data includes image data and the voice information of the user.

4. The communication assistance system according to any one of claims 1 to 3,
wherein the at least one processor selects the movement pattern such that a visual line of the avatar is directed toward the second user.

5. The communication assistance system according to any one of claims 1 to 4,
wherein the at least one processor generates the control data by expressing the selected movement pattern in a text.

6. The communication assistance system according to claim 5,
wherein the at least one processor generates the control data by describing the selected movement pattern in a JSON format.

7. The communication assistance system according to any one of claims 1 to 6,
wherein the non-verbal behavior includes at least a visual line of the first user,
each movement pattern included in the movement pattern group indicates at least the visual line of the avatar, and
the at least one processor selects the movement pattern indicating the visual line of the avatar corresponding to the visual line of the first user.

8. The communication assistance system according to claim 7,
wherein the non-verbal behavior further includes at least one of a posture, a motion, and a facial expression of the first user,
each movement pattern included in the movement pattern group further indicates at least one of a posture, a motion, and a facial expression of the avatar, and
the at least one processor selects the movement pattern indicating at least one of the posture, the motion, and the facial expression of the avatar corresponding to at least one of the posture, the motion, and the facial expression of the first user.

9. The communication assistance system according to claim 7 or 8,
wherein the movement pattern group includes a movement pattern indicating at least one of a rotation of an upper body of the avatar, a rotation of a neck of the avatar, and a movement of pupils of the avatar, which are performed in accordance with a change in the visual line of the avatar.

10. The communication assistance system according to any one of claims 1 to 9,
wherein the video data includes an image data and voice data, and
the at least one processor
separates the video data into the image data and the voice data,
analyzes the image data and selects the movement pattern corresponding to the non-verbal behavior of the first user, and
transmits a set of non-verbal behavior data indicating the selected movement pattern and the voice data as the control data to the second terminal.

11. The communication assistance system according to any one of claims 1 to 10,
wherein the at least one processor transmits shared item data indicating a shared item to each of a first terminal and a second terminal such that a virtual space including the shared item is displayed on each of the first terminal and the second terminal.

12. A communication assistance method executed by a communication assistance system that assists communication between a first user corresponding to a first terminal and a second user corresponding to a second terminal and includes at least one processor, the method comprising:
a step of receiving video data representing the first user from the first terminal;
a step of analyzing the video data and of selecting a movement pattern corresponding to a non-verbal behavior of the first user from a movement pattern group of an avatar; and
a step of transmitting control data indicating the selected movement pattern to the second terminal such that an avatar corresponding to the first user in a virtual space displayed on the second terminal is moved based on the selected movement pattern.

13. A communication assistance program for allowing a computer to function as the communication assistance system according to claim 1, the program allowing the computer to execute:
a step of receiving video data representing the first user from the first terminal;
a step of analyzing the video data and of selecting a movement pattern corresponding to a non-verbal behavior of the first user from a movement pattern group of an avatar; and
a step of transmitting control data indicating the selected movement pattern to the second terminal such that an avatar corresponding to the first user in a virtual space displayed on the second terminal is moved based on the selected movement pattern.

14. An image control program for allowing a computer to function as a second terminal that is capable of being connected to a first terminal through a communication network, the program allowing the computer to execute:
a step of receiving control data indicating a movement pattern corresponding to a non-verbal behavior of a first user corresponding to the first terminal, the movement pattern being selected as the movement pattern corresponding to the non-verbal behavior from a movement pattern group of an avatar by analyzing video data of the first user that is captured by the first terminal; and
a step of moving an avatar corresponding to the first user in a virtual space displayed on the second terminal, based on the movement pattern that is indicated by the received control data.
